# FASCICULE DE BREVET EUROPEEN

(11) **EP 2 534 357 B1**
(45) Date de publication et mention de la délivrance du brevet: **13.05.2015**
(21) Numéro de dépôt: 11708547.2
(22) Date de dépôt: 10.02.2011
(51) Int. Cl.: F02G 1/04, F02G 1/043, F03G 7/00, F25B 29/00

(54) **MACHINE THERMOACOUSTIQUE A BOUCLE DE RETROACTION ELECTRIQUE**
THERMOAKUSTISCHE MASCHINE MIT ELEKTRISCHER RÜCKKOPPLUNGSSCHLEIFE
THERMOACOUSTIC MACHINE HAVING AN ELECTRIC FEEDBACK LOOP

(30) Priorité: 10.02.2010 FR 1050931
(43) Date de publication de la demande: 19.12.2012
(73) Titulaire: Hekyom, 91190 Saint-aubin (FR)
(72) Inventeur: FRANCOIS, Maurice-Xavier, F-91190 Gif-sur-yvette (FR); LE POLLES, Thierry, F-75019 Paris (FR); BETRANCOURT, Adrien, F-75013 Paris (FR)
(74) Mandataire: Pontet Allano & Associes
(86) Numéro de dépôt international: PCT/FR2011/050284
(87) Numéro de publication internationale: WO 2011/098735

(56) Documents cités:
- WO-A2-2009/156717
- US-A- 5 146 750
- US-A1- 2003 192 324

## Description

### DOMAINE TECHNIQUE DE L'INVENTION

L'invention se rapporte au domaine des machines thermoacoustiques c'est-à-dire des machines thermiques telles que générateurs d'onde, réfrigérateurs ou pompes à chaleur mettant en oeuvre au sein d'un fluide, contenu dans une enceinte fermée et à l'échelle du déplacement acoustique des cycles thermodynamiques de type Stirling ou Ericsson permettant une conversion d'énergie thermoacoustique.

### ETAT DE LA TECHNIQUE ANTERIEURE

Toute machine thermique nécessite au moins la présence de deux sources de chaleur à des températures différentes, d'un système de transmission de travail mécanique et d'un agent de conversion d'énergie décrivant un cycle thermodynamique.

Dans une machine thermoacoustique l'onde sonore impose au fluide de travail une oscillation autour d'une position moyenne. Considérant, en première approximation une oscillation sinusoïdale, la longueur du déplacement crête est appelée déplacement particulaire. Dans ces conditions, l'oscillation totale s'effectue sur une longueur égale à deux déplacements particulaires. L'oscillation autour de la position moyenne s'accompagne simultanément de phases de compression/détente du fluide.

Le travail mécanique généré prend la forme d'un travail acoustique exprimé par unité de temps et appelé puissance acoustique qui correspond à la moyenne temporelle, sur une période acoustique, du produit de la pression acoustique par le débit volumique du fluide oscillant.

Le fluide de conversion qui doit être dilatable est généralement un gaz (ou un liquide près du point critique), tel que de l'hélium. Le cycle thermodynamique mis en oeuvre par l'onde acoustique est réalisé à une échelle réduite qui correspond à celle du déplacement particulaire de la particule de fluide oscillante.

L'entité de base de toute machine thermoacoustique où se déroule la conversion d'énergie par le processus thermoacoustique sera appelé « cellule thermoacoustique » dans la suite de ce texte.

Cette cellule thermoacoustique est composée d'une matrice solide et poreuse intercalée entre un premier échangeur de chaleur dit « chaud » à température Tc et un deuxième échangeur de chaleur dit « froid » à température Tf<Tc. La matrice solide et poreuse permet d'obtenir une grande surface d'échange entre le fluide agent de conversion et le solide. C'est dans la cellule thermoacoustique qu'est amplifiée la puissance acoustique par apport de chaleur ou qu'est pompée de la chaleur par apport de puissance acoustique. Dans le cas d'un générateur d'onde, d'une pompe à chaleur, d'un amplificateur ou d'un réfrigérateur utilisant un cycle de Stirling ou d'Ericsson, les pores de la matrice solide doivent être de dimensions très inférieures à l'épaisseur des « couches limites thermiques ». Dans ce contexte, la matrice poreuse est appelée « régénérateur » .

La mise en oeuvre des cycles thermodynamiques réversibles de type Stirling ou Ericsson nécessite d'avoir un contact très intime entre le fluide et le solide au cours de son déplacement entre les deux sources de chaleur localisées au sein de la matrice solide. Cette matrice solide est plus ou moins dense et permet une bonne propagation des ondes acoustiques puisque les dimensions des pores ou canaux parallèles qui la composent sont très inférieures à la longueur d'onde du champ acoustique considéré. Par ailleurs, la dimension longitudinale du régénérateur étant toujours au moins égale à deux déplacements particulaires, au moins un cycle thermodynamique peut être mis en oeuvre dans le régénérateur.

La réalisation du cycle thermodynamique local nécessite que des transformations thermodynamiques se succèdent de façon coordonnée dans le temps. La synchronisation de ces transformations thermodynamiques qui correspond à un arrangement entre les phases de déplacement, de compression et de détente du fluide, est réalisée par l'onde acoustique. Ainsi, par exemple, pour un cycle moteur, les apports de chaleur sont tels que le fluide réalise localement une extension (ou dilatation) thermique lorsque sa pression est maximale et une contraction thermique lorsque sa pression est minimale.

Dans le cas d'un générateur d'onde ou d'un amplificateur, ce sont les gradients de température locaux, imposés au sein de la cellule thermoacoustique par les échangeurs de chaleur, qui sont à l'origine de la conversion d'énergie thermique en énergie acoustique. Réciproquement, le cycle thermodynamique utilisé en sens de parcours inverse, permet de réaliser un pompage de chaleur et d'établir un gradient de température dans la cellule thermoacoustique.

On définit pour la suite, l'impédance acoustique spécifique comme le rapport des amplitudes complexes de la pression acoustique sur la vitesse acoustique ainsi que l'impédance adimensionnelle comme le rapport de l'impédance acoustique spécifique sur l'impédance caractéristique du milieu égale au produit de la densité locale du fluide de travail par la vitesse de propagation locale du son.

La mise en oeuvre de cycles thermodynamiques de type Stirling ou Ericsson au sein du régénérateur nécessite d'obtenir localement une onde à caractère progressif. Dans la pratique, un caractère progressif de l'onde est réalisé pour des déphasages entre pression acoustique et vitesse acoustique compris de façon connue entre + 70° et-70 °.

Par ailleurs, pour atteindre de bons rendements de conversion, il est nécessaire de limiter les pertes visqueuses au sein de la cellule thermoacoustique en limitant la vitesse acoustique par ajustement de certains paramètres dimensionnels ou de positionnement dans le champ acoustique du système considéré.

Ainsi, l'impédance acoustique spécifique devient nettement supérieure à l'impédance caractéristique du milieu. Dans la littérature, l'impédance adimensionnelle prend alors des valeurs généralement comprises entre 2 et 50.

La réalisation pratique de ces conditions sur la phase et la vitesse du fluide comme décrite ci-dessus se réalise au travers d'un circuit de rétroaction acoustique comprenant à priori une inductance et une capacitance acoustique ainsi que les résistances induites par le régénérateur et les échangeurs de chaleur.

Un système de déphasage acoustique décrit ci-avant dans les machines dites « en boucle » induit également des pertes visqueuses, engendrées par une certaine valeur de résistance visqueuse au sein du régénérateur, nécessaire au réglage de la phase dans cet élément. Les rendements de conversion peuvent s'en trouver limités.

Par système « en boucle » on entend un système dans lequel les éléments qui constituent le circuit, notamment l'inductance et la capacitance, forment une boucle géométriquement fermée qui relie l'entrée et la sortie de la cellule thermoacoustique.

Un exemple de système de rétroaction acoustique est illustré par le document WO 99/20957 [3] qui divulgue un résonateur, un régénérateur intercalé entre deux échangeurs de chaleur, et au moins une dérivation disposée autour du régénérateur permettant de créer, au sein de la cellule thermoacoustique, une forte valeur d'impédance adimensionnelle ainsi qu'une onde à caractère progressif. Le document WO 2009/156717 montre un autre exemple de machine thermoacoustique.

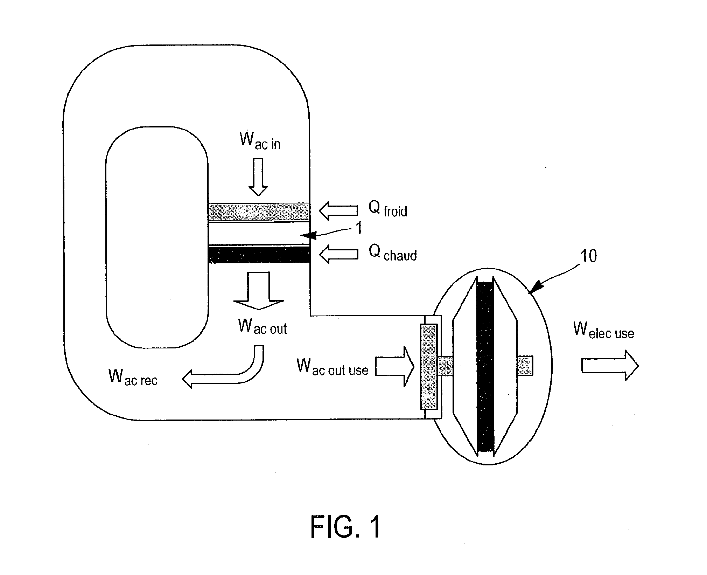

La figure 1 montre de façon schématique un système connu dit de rétroaction acoustique qui comprend une cellule thermoacoustique 1 telle que décrite en tête de description, installée dans un résonateur en boucle ayant une zone principalement capacitive et une zone principalement selfique. En sortie de la cellule thermoacoustique 1, la puissance acoustique (Wacout) est divisée en deux parties : une partie (Wacrec) est réinjectée dans la boucle du résonateur (circuit de rétroaction) pour venir alimenter en puissance acoustique la cellule thermoacoustique 1 tandis que l'autre partie (Wacoutuse) alimente un système 10 de conversion de puissance acoustique en puissance électrique (Welecuse).

Cependant, dans ces machines dites « en boucle », il est nécessaire d'utiliser des membranes ou des systèmes appelés « jet pumps » pour empêcher l'apparition d'un mouvement de masse continu du fluide se superposant à l'onde acoustique appelé « Gedeon Streaming ». Les « jets pumps » sont d'une utilisation complexe et sont dimensionnées pour un point de fonctionnement particulier. Des systèmes dynamiques existent pour s'adapter aux différentes conditions d'utilisation de ce type de machine mais ils nécessitent une mécanique fine et un système de contrôle complexe.

L'utilisation d'une membrane présente, quant à elle, un risque de déchirement et donc un manque de fiabilité sur le long terme.

De plus les systèmes « en boucle » ou à rétroaction acoustique peuvent également poser de sérieux problèmes de mise en oeuvre pratique et de fabrication mécanique lorsqu'il s'agit de réaliser les courbures géométriques de la compliance et de l'inductance ou encore pour réaliser une isolation thermique du système.

En outre, dans ces systèmes connus les dimensions longitudinales des échangeurs étant de l'ordre de un à deux déplacements particulaires, plus celui-ci sera grand plus la surface d'échange sera importante. Il est donc judicieux pour accéder à de fortes puissances de travailler à basse fréquence afin d'augmenter le déplacement particulaire au niveau de ces échangeurs de chaleur. Cependant, certaines applications nécessitent une compacité importante du système thermoacoustique qui ne permet pas l'utilisation de basse fréquence.

Par ailleurs, l'utilisation de pressions élevées du fluide de travail dans les machines pour augmenter la puissance disponible, peut induire un produit, pression fois volume de gaz, important. Ceci engendre des contraintes sévères au niveau du classement des machines selon le code des appareils sous pression qui peuvent être rédhibitoires pour certaines applications.

Une taille élevée de pistons donc des diamètres induit des pertes de charges importantes voire inacceptables au niveau du pourtour de ces éléments lorsque des joints fluides appelés « clearance seal » sont utilisés. De plus, des diamètres importants peuvent générer des problèmes de coaxialité entre les pistons mis en oeuvre et la chambre qui les reçoit ou la membrane ou le soufflet sur lesquels ils s'appuient.

### EXPOSE DE L'INVENTION

L'invention vise à remédier aux inconvénients de l'état de la technique et notamment à permettre de travailler dans des zones de forte impédance adimensionnelle avec des éléments de faibles dimensions, notamment des pistons, membranes ou soufflets associés aux moyens de conversion, de faibles diamètres.

En outre les volumes des gaz sous pression utilisés dans les machines selon l'invention sont faibles de sorte que les normes en la matière peuvent être facilement respectées.

De plus, les architectures acoustiques « linéaires » mises en oeuvre, n'engendrent pas de mouvement de masse de type « Gedeon streaming » rendant inutile l'utilisation de membranes ou de « jet pump ».Par architecture « linéaire » on entend une architecture qui n'est pas conformée selon une boucle.

Une simplification de la fabrication résulte de telles architectures, et donc un coût réduit.

Pour ce faire est proposé selon un premier aspect de l'invention une machine thermoacoustique comprenant : au moins au moins une cellule thermoacoustique située dans une zone de forte impédance adimensionnelle, constituée d'une matrice poreuse intercalée entre un premier échangeur de chaleur fonctionnant à une première température T1 et un deuxième échangeur de chaleur fonctionnant à une deuxième température T2 différente de la première température T1,et qui permet la réalisation d'un cycle thermodynamique de type Stirling ou Ericsson réalisant un cycle moteur ou de pompage de chaleur, au moins un premier système de conversion d'énergie disposé au voisinage immédiat de la sortie de l'au moins une cellule relativement au sens de propagation de l'énergie acoustique et destiné à transformer l'énergie acoustique en sortie de l'au moins une cellule en énergie électrique, et éventuellement un moyen additionnel utilisé pour le démarrage de la machine et/ou son fonctionnement en régime permanent.

Conformément à un aspect de l'invention, la machine comprend en outre : au moins un deuxième système de conversion d'énergie, de préférence pour générer une onde acoustique, et ayant une sortie reliée à l'entrée de l'au moins une cellule thermoacoustique et une entrée.

La machine selon l'invention comprend en outre un circuit de rétroaction électrique destiné à transférer tout ou partie de l'énergie électrique produite en sortie du premier système de conversion, directement ou indirectement (i.e. via un intermédiaire alimentant en électricité ladite machine, tel qu'un réseau ou système de distribution d'électricité, local ou distant) vers l'entrée du deuxième système de conversion. Ainsi, la machine selon l'invention peut comprendre en outre :
- un circuit de rétroaction électrique destiné à transférer tout ou partie de l'énergie électrique produite en sortie du premier système de conversion, vers l'entrée du deuxième système de conversion, et/ou
- un circuit de rétroaction électrique destiné à transférer tout ou partie de l'énergie électrique produite en sortie du premier système de conversion, vers un réseau ou vers un dispositif de distribution d'électricité alimentant ladite machine.

Les géométries et/ou les caractéristiques mécaniques respectives desdits systèmes de conversion et de l'au moins une cellule thermoacoustique sont de préférence tels que le déphasage entre la pression acoustique et la vitesse acoustique du fluide crée au sein de l'au moins une cellule thermoacoustique un champ acoustique à caractère progressif.

De façon intéressante, le premier et le deuxième système de conversion d'énergie sont dimensionnés de telle sorte qu'ils résonnent à la fréquence acoustique de travail de l'au moins une cellule thermoacoustique. Par « fréquence acoustique de travail », on entend la fréquence acoustique pour laquelle l'au moins une cellule thermoacoustique a été dimensionnée.

Selon un premier mode de réalisation de l'invention, la première température T1 du premier échangeur est inférieure à la deuxième température T2 dudit deuxième échangeur, et l'énergie acoustique est amplifiée entre la sortie du deuxième système et l'entrée du premier système de conversion.

Selon un autre mode de réalisation de l'invention, la première température T1 du premier échangeur est supérieure à la deuxième température T2 dudit deuxième échangeur, et l'énergie acoustique est consommée entre le deuxième et le premier système de conversion, ce qui permet de réaliser un pompage de chaleur.

La machine peut comprendre en outre un moyen d'apport d'énergie couplé au deuxième système de conversion d'énergie.

De façon particulière, le premier système de conversion d'énergie comprend un premier moyen de mise en mouvement dudit fluide. De façon préférée, le premier moyen de mise en mouvement peut être un piston, une membrane ou un soufflet ou toute combinaison de ces éléments.

Avantageusement, le deuxième système de conversion d'énergie comprend au moins un deuxième moyen de mise en mouvement du fluide. Le deuxième moyen peut être un piston, une membrane, un soufflet ou toute combinaison de ces éléments.

Selon un aspect intéressant de l'invention, le circuit de rétroaction électrique comprend au moins une liaison électrique.

Le circuit de rétroaction électrique peut en outre comprendre un moyen de déphasage et/ou d'adaptation de fréquence.

En outre, l'au moins une cellule thermoacoustique peut comprendre un échangeur de chaleur additionnel placé au niveau de sa sortie, relativement au sens de propagation de l'énergie acoustique, et destiné à réaliser un potentiel thermique à l'entrée du premier système de conversion. Cet échangeur additionnel, encore appelé échangeur final, évite donc la surchauffe et/ou le refroidissement des constituants du premier système de conversion, et notamment du premier élément oscillant.

De façon avantageuse, l'au moins une cellule thermoacoustique comprend une zone située entre le deuxième échangeur et l'échangeur additionnel, ladite zone présente une géométrie adaptée à réaliser un tampon thermique entre lesdits éléments ; cette zone de tampon thermique est appelé communément « buffer tube ».

Selon l'invention, on réalise une machine particulièrement compacte, avec des rendements élevés.

### BREVE DESCRIPTION DES FIGURES

[001]D'autres caractéristiques, détails et avantages de l'invention ressortiront à la lecture de la description qui suit, en référence aux figures annexées, qui illustrent :
- la figure 2, est une vue schématique d'une machine thermoacoustique selon un premier mode de réalisation de l'invention;
- la figure 3 est une courbe du débit volumique (U1) en fonction de la phase entre pression (p1) et débit volumique (U1) ;
- la figure 4 est une vue schématique d'une machine thermoacoustique selon un deuxième mode de réalisation de l'invention ; et
- la figure 5 est une vue schématique d'un troisième mode de réalisation de l'invention
- la figure 6 est une variante du mode de réalisation de la figure 2,
- la figure 7 est une variante du mode de réalisation de la figure 5,
- la figure 8 est une autre variante du mode de réalisation de la figure 2, et
- la figure 9 est une autre variante du mode de réalisation de la figure 5.

Pour plus de clarté, les éléments identiques ou similaires sont repérés par des signes de référence identiques sur l'ensemble des figures.

### DESCRIPTION DETAILLEE D'UN MODE DE REALISATION

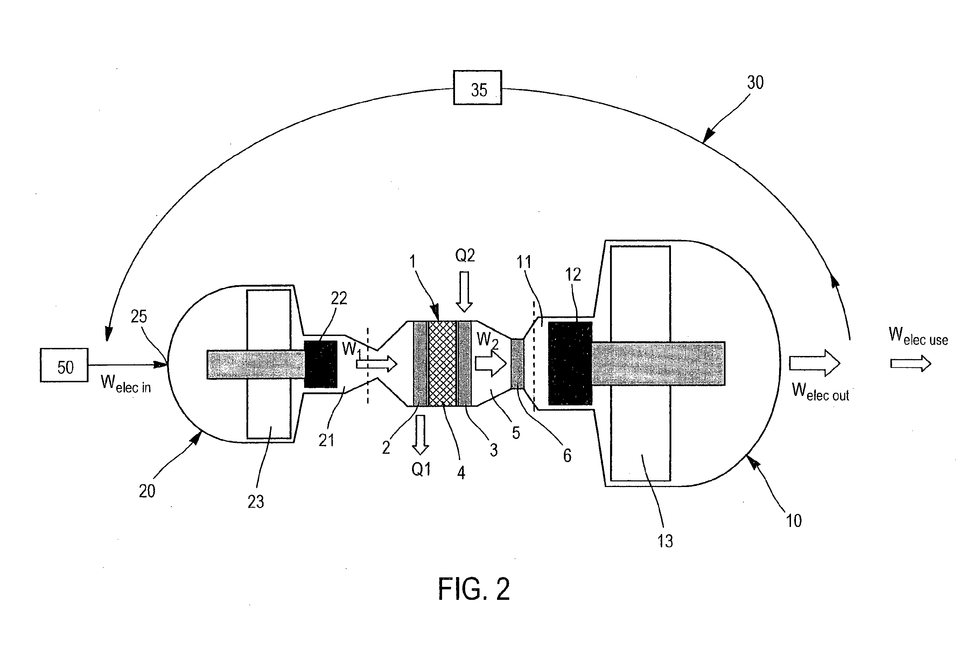

La figure 2 montre de façon schématique une machine selon un premier mode de réalisation de l'invention.

Selon ce schéma, la machine thermoacoustique comprend une cellule thermoacoustique 1 constituée d'une entrée équipée d'un premier échangeur de chaleur 2 fonctionnant à une température T1, et d'une sortie 5 équipée d'un deuxième échangeur de chaleur 3 fonctionnant à une température T2 différente de T1. L'entrée et la sortie de la cellule thermoacoustique 1 sont définies relativement au sens de propagation de l'énergie acoustique dans la cellule thermoacoustique 1.

Conformément à ce mode de réalisation de l'invention, le gradient de température dans la cellule thermoacoustique 1 permet de réaliser une amplification de l'énergie acoustique selon un cycle thermodynamique moteur de type Stirling ou Ericsson. L'énergie acoustique en sortie de cellule thermoacoustique est alors au plus égale au rapport des températures exprimées en Kelvin, T2/T1, multiplié par l'énergie acoustique en entrée de cellule thermoacoustique 1.

Pour ce faire, le deuxième échangeur de chaleur 3 reçoit une quantité de chaleur Q2, d'une source extérieure tandis que le premier échangeur 2 rejette une quantité de chaleur Q1, non utilisée dans le cycle de conversion thermodynamique, à une température T1 inférieure à la température T2 du deuxième échangeur 3. La température T1 peut être la température ambiante, par exemple de l'ordre de 20 °C ; la température T2 peut être par exemple de l'ordre de 700 °C. La chaleur fournie à une température appropriée peut être de toute nature, par exemple la combustion de biomasse ou de biogaz, la récupération de rejets thermiques ...

Entre les premier 2 et deuxième 3 échangeurs de chaleur est intercalée une matrice solide et poreuse 4 permettant d'avoir une grande surface d'échange avec le fluide qui la traverse.

En outre la cellule thermoacoustique 1 peut comprendre un échangeur de chaleur additionnel 6 dit échangeur final et destiné à réaliser un potentiel de température et à limiter la température au niveau de sa sortie. Il s'agit par ce moyen d'éviter la surchauffe de l'élément placé et couplé à la sortie de la cellule thermoacoustique 1.

Selon le mode de réalisation de l'invention illustré sur la figure 2, la zone 5 de la cellule thermoacoustique 1 située entre le deuxième échangeur 3 et l'échangeur additionnel 6, présente une section décroissante relativement au sens de propagation de l'énergie acoustique. Cette zone appelée couramment appelée « buffer tube » permet de réaliser un tampon thermique et ainsi d'isoler thermiquement la cellule thermoacoustique. Ainsi la section transversale de la zone 5 peut être, selon le cas de figure, croissante, décroissante ou constante. Une géométrie adaptée sera choisie et définie par l'homme de métier.

Par ailleurs, au voisinage immédiat de la sortie de la cellule thermoacoustique 1, relativement au sens de propagation de l'énergie acoustique qui la traverse, on prévoit un premier système de conversion d'énergie 10 qui comprend notamment un élément oscillant 12 tel qu'un piston, une membrane, un soufflet ou toute association de ces éléments ainsi qu'un moyen de mise en oscillation 13.

La puissance acoustique en sortie de cellule thermoacoustique 1 est ainsi directement et entièrement transmise au premier système de conversion d'énergie 10.

Par « voisinage immédiat », on entend une distance très inférieure au ¼ de la longueur d'onde.

Ainsi, le système de conversion 10 étant placé au voisinage immédiat d'une zone de forte impédance adimensionnelle où règne un champ acoustique à caractère progressif, sa taille et les déplacements des éléments oscillants pourront être faibles. Vis-à-vis de l'art antérieur, une diminution de l'encombrement fort intéressante est ainsi réalisée.

En sortie du premier système de conversion d'énergie 10, une partie de l'énergie électrique produite (Welecout) est récupérée par un système de rétroaction électrique 30 tandis que tout ou partie de l'énergie restante (Welecuse) est utilisée pour toute application extérieure, comme par exemple pour alimenter un appareil ou pour être transférée et/ou revendue dans un réseau de distribution d'électricité ...

De façon intéressante, le système 30 de rétroaction électrique qui peut être constitué d'une liaison électrique, est par ailleurs relié à l'entrée 25 d'un deuxième système de conversion 20 destiné à convertir de l'énergie électrique en énergie acoustique.

Le deuxième système de conversion 20 comprend une sortie 21 reliée à l'entrée de la cellule thermoacoustique 1 ; la sortie 21 est équipée d'un élément oscillant tel qu'un piston 22, une membrane, un soufflet ou toute association de ces éléments pour générer une onde acoustique ; un moyen 23 de mise en mouvement de l'élément oscillant 22 est prévu dans le deuxième système de conversion 20. Ainsi, la puissance acoustique (W1) créée en sortie du deuxième système de conversion d'énergie 20 est transmise directement à l'entrée de la cellule thermoacoustique 1, ici au premier échangeur de chaleur 2 qui fonctionne à une température T1 inférieure à la température T2 du deuxième échangeur de chaleur 3, comme décrit ci-avant.

Les systèmes 10, 20 de conversion d'énergie étant disposés, selon l'invention, au voisinage immédiat de la cellule thermoacoustique 1, on profite ainsi d'une zone à forte impédance adimensionnelle où règne un champ acoustique à caractère progressif. Ceci induit des débits acoustiques de fonctionnement faibles permettant d'avoir des dimensions faibles des différents constituants et notamment des pistons, des membranes, des soufflets ou de tout autre élément constitutif des systèmes de conversion 10, 20.

De même l'invention permet des débattements des différents éléments oscillants plus faibles que les débattements dans des dispositifs connus tels que schématisés par exemple sur la figure 1.

Vis-à-vis de machines connues, on diminue ainsi les pertes hydrodynamiques ou par frottements.

Par système de conversion d'énergie l'invention entend également plusieurs systèmes « unitaires » tels que décrits ci-dessus, placés en parallèles.

Selon un exemple illustratif, une machine présentant les caractéristiques suivantes peut être mise en oeuvre dans le cadre de l'invention :

| | **°C** | **K** | |
|---|---|---|---|
| **T2** | **700** | **973** | |
| **T1** | **30** | **303,15** | |
| **RCV = W1/W_{elec in} (%)** | **85** | | Rendement de conversion électrique (%) |
| **E/C(%)** | | **55** | 0,55 x T2 / (T2-T1) : Efficacité (%) par rapport à Carnot ampli |
| **Ampli Th.** | | **3,21** | T2/T1 (exprimés en K) |
| **Ampli Réelle** | | **2,89** | 90% Amphi Th |
| **Eta Carnot** | | **0,68** | (T2-T1) / T2 |

| | **1 étage** | **2 étages** | |
|---|---|---|---|
| W 1 (W) | **1000** | 2890 | |
| W 2 (W) | 2890 | 8352 | |
| Q 2 (W) | 4990 | 14 423 | |
| W_{elec in} (W) | 1176 | 1176 | |
| W_{elec out} (W) | 2456 | 7100 | |
| W_{elec use} (W) | 1280 | 5923 | |
| W_{elec use} (KVA) | 1600 | 7404 | |
| 75% W_{elec use} (KVA) | **2133** | **9872** | |
| **E R C (%)** | **25,65** | **30,51** | W_{elec use} / Q2 = Efficacité Réelle de conversion |
| **R Ca (%)** | **37,70** | **0,44** | Rendement par rapport à Carnot = ERC / Eta Carnot |

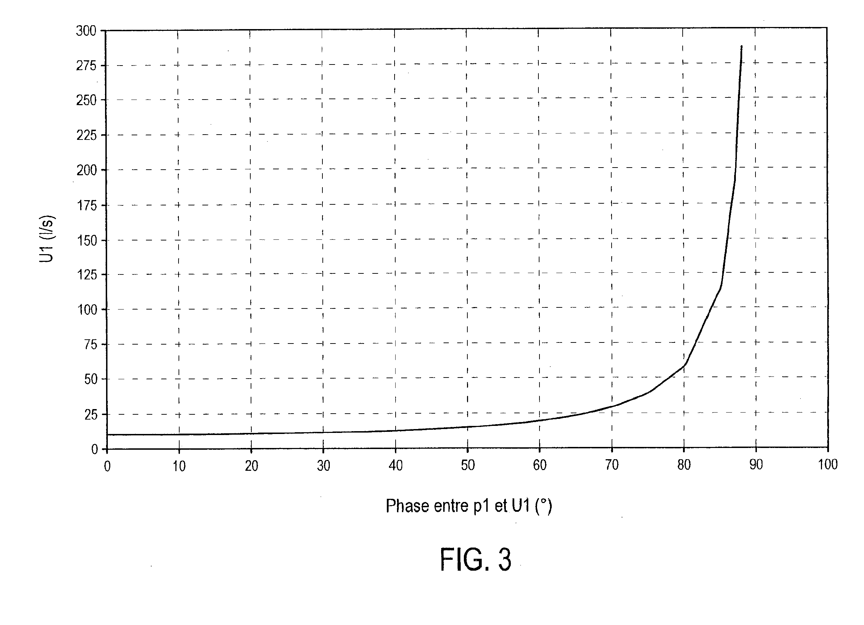

A puissance acoustique et à drive ratio (rapport de l'amplitude de pression acoustique sur celle de la pression moyenne de remplissage du fluide de travail du système) fixés, il devient très intéressant pour diminuer le débit acoustique et donc le diamètre des pistons des systèmes de conversion, de fournir la puissance (ou de récupérer la puissance) acoustique avec des phases entre pression et débit acoustique faibles. A titre d'exemple, la figure 3 montre l'évolution du débit volumique (U1) en fonction de la phase entre pression et débit volumique pour une pression moyenne de 40 bars, un drive ratio de 5% et une puissance de 1000 Watts. En entrée de boucle (pompe à chaleur) ou en sortie de boucle (générateur d'onde), la phase moyenne entre pression et débit est en général comprise entre 86° et 89°. A titre d'exemple, le rapport des débits pour une phase de 87 degrés et une phase de 20 degrés est de 18. Considérant un déplacement et une fréquence identiques dans les deux cas, le rapport des diamètres de piston est de 4,2, ce qui représente une diminution tout à fait significative de la taille de cet élément.

En outre un moyen 35 de déphasage et/ou d'adaptation de fréquence est prévu au niveau du système 30 de rétroaction électrique. L'intérêt d'un tel déphasage est de permettre le contrôle de la phase de l'un des systèmes de conversion vis-à-vis de l'autre et de permettre l'obtention d'un champ acoustique donné au sein de la cellule thermoacoustique.

Pour le démarrage de la machine, on peut prévoir un système additionnel 50 de fourniture de puissance électrique à l'entrée 25 du deuxième système de conversion, ou bien un système de démarrage mécanique. De plus, le système additionnel 50 peut permettre en outre de maintenir le fonctionnement de la machine selon l'invention en régime permanent. Dans le cas d'un système électrique 50, ce système 50 est typiquement un groupe électrogène, ou dans une autre variante est un système d'alimentation par un réseau de distribution d'électricité distribuant de l'électricité produite à distance dans une centrale électrique.

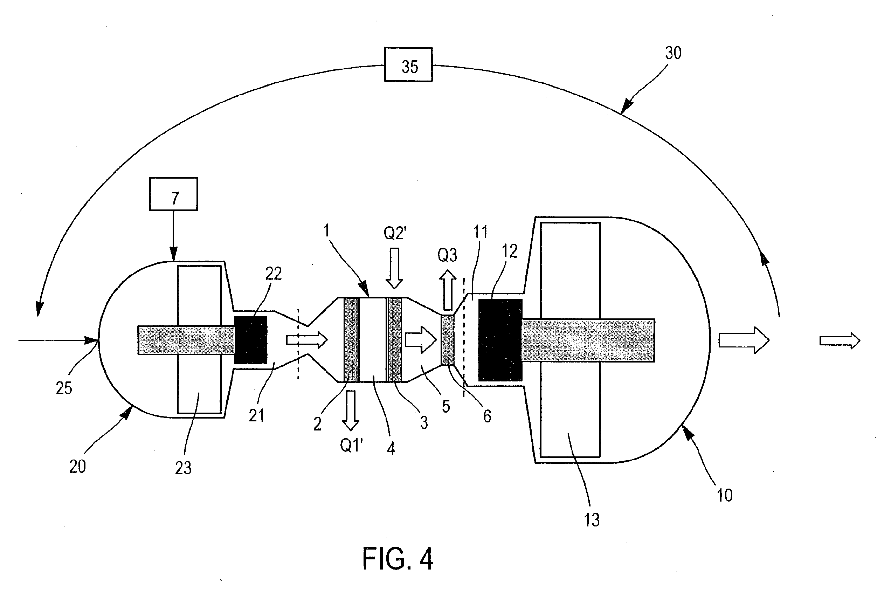

La figure 4 illustre de façon schématique un autre mode de réalisation de l'invention qui diffère du premier par les apports d'énergie dans la cellule thermoacoustique 1 et donc la finalité de la machine qui fonctionne ici en pompe à chaleur ou réfrigérateur.

Plus précisément au niveau de la cellule thermoacoustique 1, le premier échangeur 2 fonctionne à une température T1 supérieure à la température T2 de fonctionnement du deuxième échangeur de chaleur 3. Ainsi, le premier échangeur 2 rejette une quantité de chaleur Q1', tandis que le deuxième échangeur 3 pompe une quantité de chaleur Q2'. Ce mode de fonctionnement nécessite un apport d'énergie extérieure tel que schématisé par la référence 7 sur la figure 4 ; L'apport d'énergie se fera préférentiellement au niveau du deuxième système de conversion d'énergie 20, par tout moyen disponible aujourd'hui ou dans le futur.

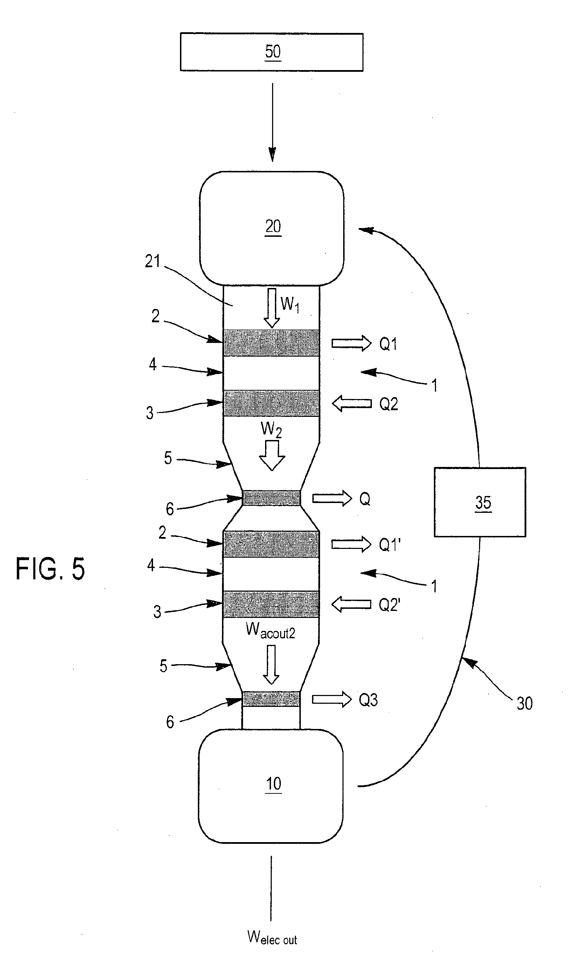

La figure 5 illustre de façon schématique un mode de réalisation de l'invention selon lequel sont associés en série une cellule thermoacoustique 1 réalisant une amplification d'énergie et une cellule thermoacoustique 1 opérant un pompage de chaleur. La partie supérieure du schéma montre la cellule d'amplification tandis que sur la partie inférieure du schéma, c'est une cellule 1 opérant un pompage de chaleur qui est représentée. Les autres éléments constitutifs de l'invention sont bien entendu repérés par les mêmes références que précédemment, avec notamment le premier 10 et le deuxième 20 système de conversion d'énergie qui fonctionnent comme énoncé ci-dessus, ainsi que le circuit 30 de rétroaction électrique.

En fonction des besoins, l'homme de métier pourra donc faire fonctionner la machine thermoacoustique selon l'invention soit comme un générateur d'électricité, soit en pompe à chaleur, soit selon un mode cumulant ces deux modes. Des modifications mineures doivent être apportées afin de dédier la machine à une fonctionnalité ou à une autre, en conservant tous les avantages intrinsèques de la machine, tels que notamment énoncés plus haut.

Dans des variantes des modes de réalisation venant d'être décrits, le système additionnel 50 de fourniture de puissance électrique est typiquement un système d'alimentation par un réseau de distribution d'électricité distribuant de l'électricité produite à distance dans une centrale électrique. Dans ces variantes, le circuit de rétroaction électrique 30 peut être agencé pour transférer tout ou partie de l'énergie électrique produite en sortie du premier système de conversion 10, vers ce réseau 50 de distribution d'électricité alimentant ladite machine, par exemple pour être revendue. La quantité d'énergie transférée au réseau 50 est inférieure ou égale à Welec out-Welec use.

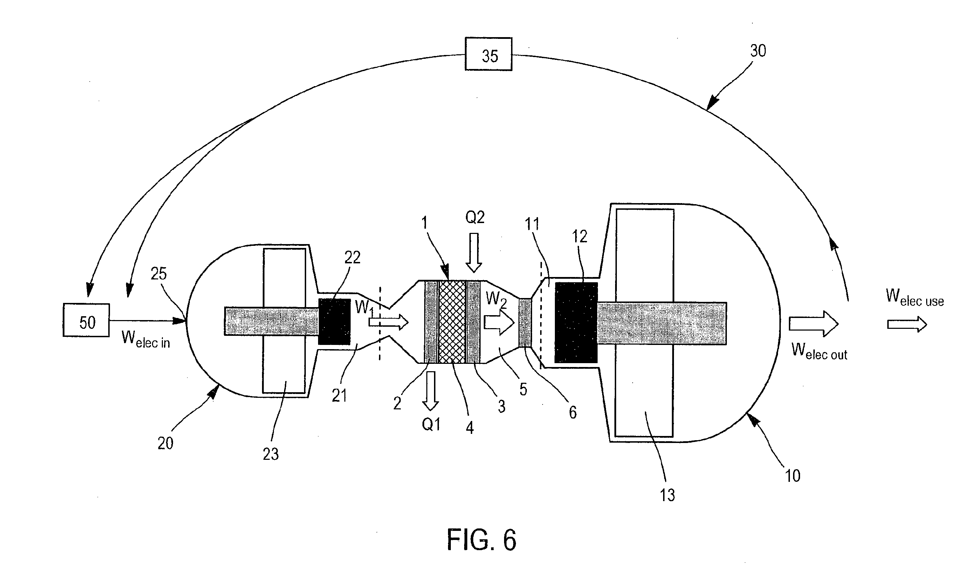

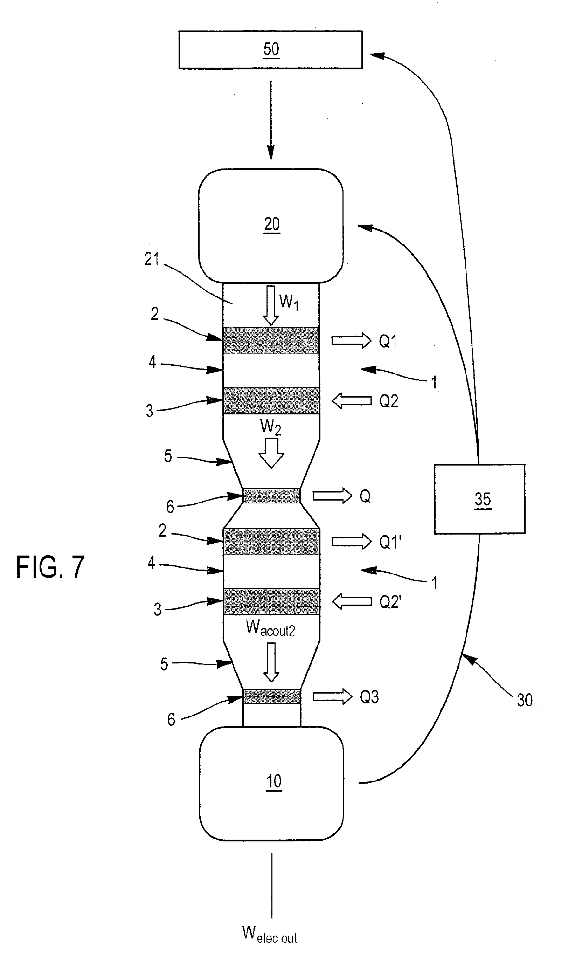

En référence aux figures 6 et 7, la quantité d'énergie transférée au réseau 50 peut par exemple être égale à (Welec out - Welec use - W elec in), dans un cas où le circuit de rétroaction électrique 30 est en outre destiné à transférer tout ou partie (Welec in) de l'énergie électrique produite en sortie du premier système de conversion 10, directement vers l'entrée du deuxième système de conversion 20, comme décrit précédemment.

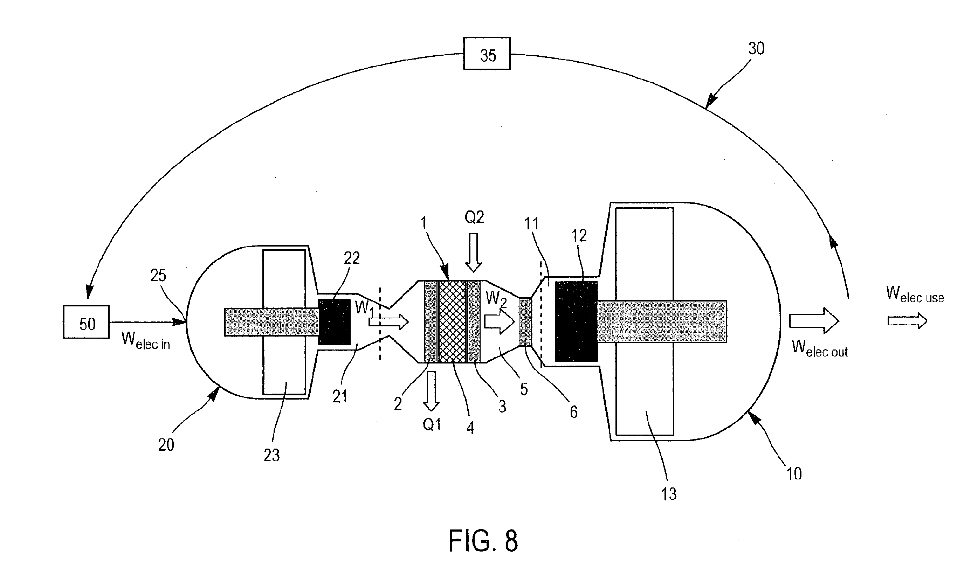

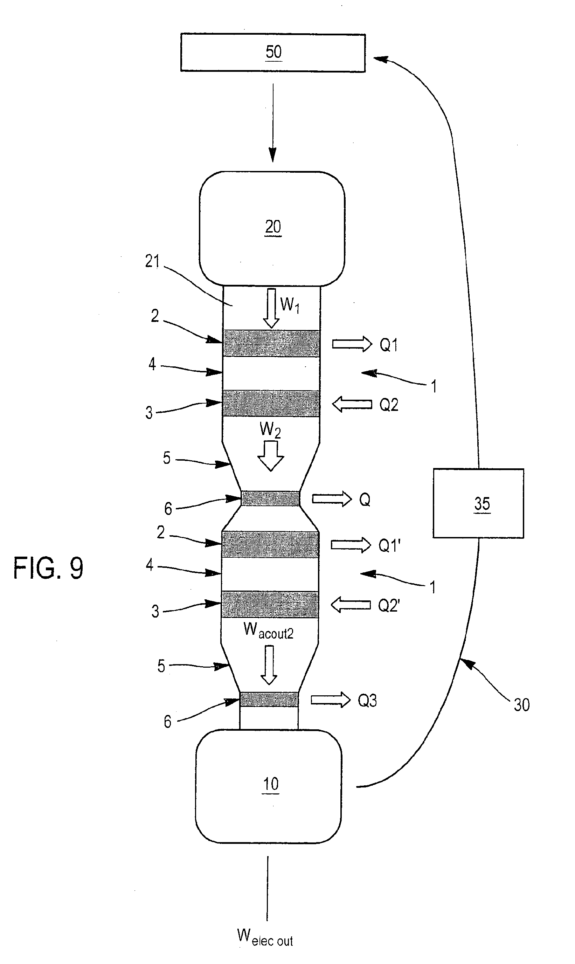

En référence aux figures 8 et 9, la quantité d'énergie transférée au réseau 50 peut aussi par exemple être égale à (Welec out - Welec use), dans un cas où le circuit de rétroaction électrique 30 n'est pas destiné à transférer tout ou partie de l'énergie électrique produite en sortie du premier système de conversion 10, directement vers l'entrée du deuxième système de conversion 20, mais où la machine selon l'invention est alimentée en énergie (selon la quantité Welec in) par le réseau 50.

Bien entendu, Welec use est de préférence strictement supérieur à zéro, mais peut aussi être nul dans certains cas.

## Revendications

1. Machine thermoacoustique comprenant :
• au moins une cellule thermoacoustique (1) située dans une zone de forte impédance adimensionnelle constituée d'une matrice poreuse (4) intercalée entre un premier échangeur de chaleur (2) fonctionnant à une première température T1 et un deuxième échangeur de chaleur (3) fonctionnant à une deuxième température T2 différente de la première température T1,et qui permet la réalisation d'un cycle thermodynamique de type Stirling ou Ericsson réalisant un cycle moteur ou de pompage de chaleur,
• au moins un premier système de conversion d'énergie (10) disposé au voisinage immédiat de la sortie de l'au moins une cellule thermoacoustique (1) relativement au sens de propagation de l'énergie acoustique et destiné à transformer l'énergie acoustique produite en sortie de l'au moins une cellule thermoacoustique (1) en énergie électrique,
• **caractérisée en ce qu'**elle comprend en outre au moins un deuxième système de conversion d'énergie (20) ayant une sortie (21) reliée à l'entrée de l'au moins une cellule thermoacoustique (1) relativement au sens de propagation de l'énergie acoustique, et une entrée (25);
les géométries et/ou les caractéristiques mécaniques respectives desdits systèmes de conversion (10, 20) et de l'au moins une cellule thermoacoustique (1) étant tels que le déphasage entre la pression acoustique et la vitesse acoustique du fluide crée au sein de l'au moins une cellule thermoacoustique un champ acoustique à caractère progressif, la machine comprenant en outre un circuit de rétroaction électrique (30) destiné à transférer tout ou partie de l'énergie électrique produite en sortie du premier système de conversion (10), vers l'entrée (25) du deuxième système de conversion (20).

2. Machine selon la revendication 1 **caractérisée en ce qu'**elle comprend en outre un circuit de rétroaction électrique (30) destiné à transférer tout ou partie de l'énergie électrique produite en sortie du premier système de conversion (10), vers un réseau (50) de distribution d'électricité alimentant ladite machine.

3. Machine selon l'une quelconque des revendications précédentes **caractérisée en ce que** le premier (10) et le deuxième (20) système de conversion d'énergie sont dimensionnés de telle sorte qu'ils résonnent à la fréquence acoustique de travail de l'au moins une cellule thermoacoustique (1).

4. Machine selon l'une quelconque des revendications précédentes **caractérisée en ce que** la première température T1 du premier échangeur (2) est inférieure à la deuxième température T2 dudit deuxième échangeur (3) et **en ce que** l'énergie acoustique est amplifiée entre la sortie (21) du deuxième système de conversion d'énergie et l'entrée (11) du premier système de conversion.

5. Machine selon l'une quelconque des revendications précédentes **caractérisée en ce que** la première température T1 du premier échangeur (2) est supérieure à la deuxième température T2 dudit deuxième échangeur(3), **en ce que** l'énergie acoustique est consommée entre le deuxième et le premier système de conversion, ce qui permet de réaliser un pompage de chaleur.

6. Machine selon la revendication 5 dépendante de la revendication 3 ou 4 **caractérisée en ce qu'**elle comprend en outre un moyen d'apport d'énergie (7) couplé au deuxième système de conversion d'énergie (20).

7. Machine selon l'une quelconque des revendications précédentes **caractérisée en ce que** le premier système de conversion d'énergie (10) comprend au moins un premier moyen de mise en mouvement du fluide.

8. Machine selon l'une quelconque des revendications précédentes **caractérisée en ce que** le deuxième système de conversion d'énergie (20) comprend au moins un deuxième moyen de mise en mouvement du fluide.

9. Machine selon l'une quelconque des revendication 7 ou 8 **caractérisée en ce que** ledit premier et/ou ledit deuxième moyen de mise en mouvement du fluide consiste en un piston (12, 22),et/ou une membrane et/ou un soufflet.

10. Machine selon l'une quelconque des revendications précédentes, **caractérisée en ce que** le circuit de rétroaction électrique (30) comprend au moins une liaison électrique.

11. Machine selon la revendication 10 **caractérisée en ce que** le circuit de rétroaction électrique (30) comprend en outre un moyen de déphasage (35) et/ou d'adaptation de fréquence.

12. Machine selon l'une quelconque des revendications précédentes **caractérisée en ce que** la au moins une cellule thermoacoustique (1) comprend un échangeur additionnel (6) placé au niveau de sa sortie, relativement au sens de propagation de l'énergie acoustique, et destiné à fixer un potentiel de température à l'entrée (11) du premier système de conversion (10).

13. Machine selon la revendication précédente **caractérisée en ce que** la au moins une cellule thermoacoustique (1) comprend une zone (5) située entre le deuxième échangeur (3) et l'échangeur additionnel (6),et **en ce que** ladite zone (5) présente une géométrie adaptée à réaliser un tampon thermique entre lesdits éléments (3 ; 6).

## Patentansprüche

1. Thermoakustische Maschine umfassend:
• wenigstens eine thermoakustische Zelle (1), in einem Bereich starker dimensionsloser Impedanz gelagert, aus einer porösen Matrix (4) bestehend , die zwischen einem ersten, mit einer ersten Temperatur T1 arbeitenden Wärmeübertrager (2) und einem zweiten, mit einer zweiten, anderen Temperatur T2 als mit der ersten Temperatur T1 arbeitenden Wärmeübertrager (3) angeordnet ist und die Ausführung eines thermodynamischen Stirling- bzw. Ericsson-Kreisprozesses ermöglicht, welcher einen Arbeitstakt oder einen Wärmeanregung-Kreisprozess realisiert,
• wenigstens ein erstes System zur Energieumwandlung (10), in unmittelbarer Nähe des Ausgangs der wenigstens einen thermoakustischen Zelle (1) in Abhängigkeit von der Übertragungsrichtung der Schallenergie gelagert und dazu ausgebildet, die am Ausgang der wenigstens einen thermoakustischen Zelle (1) erzeugte Schallenergie in elektrischen Strom umzuwandeln,
• **dadurch gekennzeichnet, dass** sie außerdem ein zweites System zur Energie-umwandlung (20) mit einem Ausgang (21), der mit dem Eingang der wenigstens einen thermoakustischen Zelle (1) in Abhängigkeit von der Übertragungsrichtung der Schallenergie verbunden ist, und einen Eingang (25) umfasst;
wobei die Geometrien und/oder die jeweiligen mechanischen Eigenschaften der besagten Umwandlungssysteme (10, 20) und der wenigstens einen thermoakustischen Zelle (1) derart sind, dass die Phasenverschiebung zwischen dem Schalldruck und der Schallgeschwindigkeit des Fluids innerhalb der wenigstens einen thermoakustischen Zelle ein progressives Schallfeld erzeugt, wobei die Maschine außerdem eine elektrische Rückkopplungsschaltung (30) zur vollständigen bzw. teilweisen Abgabe der am Ausgang des ersten Umwandlungs-systems (10) erzeugten Stromenergie zum Eingang (25) des zweiten Umwandlungssystems (20) hin umfasst.

2. Maschine nach Anspruch 1, **dadurch gekennzeichnet, dass** sie außerdem eine elektrische Rückkopplungsschaltung (30) zur vollständigen bzw. teilweisen Abgabe der am Ausgang des ersten Umwandlungssystems (10) erzeugten Stromenergie an ein Verteilungsnetz (50) für Strom umfasst, das die besagte Maschine versorgt.

3. Maschine nach einem der vorhergehenden Ansprüche, **dadurch gekennzeichnet, dass** das erste (10) und das zweite (20) System der Energieumwandlung derart bemessen sind, dass sie mit der Betriebstonfrequenz der wenigstens einen thermoakustischen (1) Zelle mitschwingen.

4. Maschine nach einem der vorhergehenden Ansprüche, **dadurch gekennzeichnet, dass** die erste Temperatur T1 des ersten Wärmeübertragers (2) unter der zweiten Temperatur T2 des besagten zweiten Wärmeübertragers (3) liegt, und dadurch, dass die Schallenergie zwischen dem Ausgang (21) des zweiten Systems zur Energie-umwandlung und dem Eingang (11) des ersten Umwandlungssystems verstärkt wird.

5. Maschine nach einem der vorhergehenden Ansprüche, **dadurch gekennzeichnet, dass** die erste Temperatur T1 des ersten Wärmeübertragers (2) über der zweiten Temperatur T2 des besagten zweiten Wärmeübertragers (3) liegt, und dadurch, dass die Schallenergie zwischen dem zweiten und dem ersten Umwandlungssystem verbraucht wird, was eine Wärmeanregung ermöglicht.

6. Maschine nach Anspruch 5 abhängig vom Anspruch 3 oder 4, **dadurch gekennzeichnet, dass** sie außerdem eine mit dem zweiten System zur Energie-umwandlung (20) gekoppelten Einrichtung für Energiezufuhr (7) umfasst.

7. Maschine nach einem der vorhergehenden Ansprüche, **dadurch gekennzeichnet, dass** das erste System zur Energieumwandlung (10) mindestens eine erste Einrichtung zur Bewegung des Fluids umfasst.

8. Maschine nach einem der vorhergehenden Ansprüche, **dadurch gekennzeichnet, dass** das zweite System zur Energieumwandlung (20) mindestens eine zweite Einrichtung zur Bewegung des Fluids umfasst.

9. Maschine nach einem der Ansprüche 7 oder 8, **dadurch gekennzeichnet, dass** die besagte erste und/oder die besagte zweite Einrichtung zur Bewegung des Fluids aus einem Kolben (12, 22) und/oder einem Membran und/oder einem Balg besteht.

10. Maschine nach einem der vorhergehenden Ansprüche, **dadurch gekennzeichnet, dass** die elektrische Rückkopplungsschaltung (30) mindestens eine elektrische Verbindung umfasst.

11. Maschine nach Anspruch 10, **dadurch gekennzeichnet, dass** die elektrische Rückkopplungsschaltung (30) außerdem eine Einrichtung zur Phasenverschiebung (35) und/oder zur Frequenzanpassung umfasst.

12. Maschine nach einem der vorhergehenden Ansprüche, **dadurch gekennzeichnet, dass** die wenigstens eine thermoakustische Zelle (1) einen zusätzlichen, an ihrem Ausgang in Abhängigkeit von der Übertragungsrichtung der Schallenergie angeordneten Wärmeübertrager (6) zur Festsetzung eines Temperaturpotenzials am Eingang (11) des ersten Umwandlungssystems (10) umfasst.

13. Maschine nach dem vorhergehenden Anspruch, **dadurch gekennzeichnet, dass** die wenigstens eine thermoakustische Zelle (1) einen Bereich (5) zwischen dem zweiten Wärmeübertrager (3) und dem zusätzlichen Wärmeübertrager (6) umfasst, und dass besagter Bereich (5) Abmessungen aufweist, die für die Ausführung eines Wärmepuffers zwischen den besagten Elementen (3; 6) geeignet sind.

## Claims

1. Thermoacoustic engine comprising:
• at least one thermoacoustic cell (1) situated in a dimensionless high-impedance zone constituted by a porous matrix (4) inserted between a first heat exchanger (2) operating at a first temperature T1 and a second heat exchanger (3) operating at a second temperature T2 that is different from the first temperature T1, and which makes it possible to carry out a thermodynamic cycle of the Stirling or Ericsson type producing a motor or heat pump cycle,
• at least one first energy conversion system (10) arranged in the immediate vicinity of the output of the at least one thermoacoustic cell (1) relative to the direction of propagation of the acoustic energy and intended to transform the acoustic energy produced at the output of the at least one thermoacoustic cell (1) into electrical energy
• **characterized in that** it comprises moreover at least one second energy conversion system (20) having an output (21) connected to the input of the at least one thermoacoustic cell (1) relative to the direction of propagation of the acoustic energy, and an input (25);
the respective geometries and/or mechanical characteristics of said conversion systems (10, 20) and of the at least one thermoacoustic cell (1) being such that the phase shift between the acoustic pressure and the acoustic vibration of the fluid creates a progressive acoustic field within the at least one thermoacoustic cell, the engine comprising moreover an electrical feedback circuit (30) intended to transfer all or part of the electrical energy produced at the output of the first conversion system (10), to the input (25) of the second conversion system (20).

2. Engine according to claim 1, **characterized in that** it comprises moreover an electrical feedback circuit (30) intended to transfer all or part of the electrical energy produced at the output of the first conversion system (10), to an electricity distribution network (50) supplying said engine.

3. Engine according to any one of the preceding claims, **characterized in that** the first (10) and second (20) energy conversion systems are dimensioned in such a way that they resonate at the operating acoustic frequency of the at least one thermoacoustic cell (1).

4. Engine according to any one of the preceding claims, **characterized in that** the first temperature T1 of the first exchanger (2) is less than the second temperature T2 of said second exchanger (3) and **in that** the acoustic energy is amplified between the output (21) of the second energy conversion system and the input (11) of the first conversion system.

5. Engine according to any one of the preceding claims, **characterized in that** the first temperature T1 of the first exchanger (2) is greater than the second temperature T2 of said second exchanger (3), **in that** the acoustic energy is consumed between the second and the first conversion system, which makes it possible to produce a heat pump.

6. Engine according to claim 5, dependent on claim 3 or 4, **characterized in that** it comprises moreover an energy supply means (7) coupled to the second energy conversion system (20).

7. Engine according to any one of the preceding claims, **characterized in that** the first energy conversion system (10) comprises at least one first means for moving fluid.

8. Engine according to any one of the preceding claims, **characterized in that** the second energy conversion system (20) comprises at least one second means for moving fluid.

9. Engine according to either one of claim 7 or 8, **characterized in that** said first and/or said second means for moving fluid consists of a piston (12, 22), and/or a membrane and/or a bellows.

10. Engine according to any one of the preceding claims, **characterized in that** the electrical feedback circuit (30) comprises at least one electrical connection.

11. Engine according to claim 10, **characterized in that** the electrical feedback circuit (30) comprises moreover a means for phase shifting (35) and/or frequency adaptation.

12. Engine according to any one of the preceding claims, **characterized in that** the at least one thermoacoustic cell (1) comprises an additional exchanger (6) placed at its output, relative to the direction of propagation of the acoustic energy, and intended to set a temperature potential at the input (11) of the first conversion system (10).

13. Engine according to the preceding claim, **characterized in that** the at least one thermoacoustic cell (1) comprises a zone (5) situated between the second exchanger (3) and the additional exchanger (6), and **in that** said zone (5) has a geometry adapted to produce a heat buffer between said elements (3; 6).
